Europäisches Patentamt

European Patent Office

Office européen des brevets

(19)

(11) **EP 1 474 224 B1**

(12) **EUROPÄISCHE PATENTSCHRIFT**

(45) Veröffentlichungstag und Bekanntmachung des Hinweises auf die Patenterteilung:
**29.06.2005 Patentblatt 2005/26**

(51) Int Cl.$^7$: **B01J 2/02**, B22F 9/08, C21B 3/08

(21) Anmeldenummer: 03704613.3

(22) Anmeldetag: **13.02.2003**

(86) Internationale Anmeldenummer:
**PCT/EP2003/001449**

(87) Internationale Veröffentlichungsnummer:
**WO 2003/068378 (21.08.2003 Gazette 2003/34)**

(54) **VERFAHREN ZUR HERSTELLUNG VON PARTIKELFÖRMIGEM MATERIAL**

METHOD FOR PRODUCING PARTICLE-SHAPED MATERIAL

PROCEDE DE PRODUCTION DE MATERIAU PARTICULAIRE

(84) Benannte Vertragsstaaten:
**AT BE BG CH CY CZ DE DK EE ES FI FR GB GR HU IE IT LI LU MC NL PT SE SI SK TR**

(30) Priorität: **13.02.2002 DE 10205897**

(43) Veröffentlichungstag der Anmeldung:
**10.11.2004 Patentblatt 2004/46**

(73) Patentinhaber: **Mepura Metallpulvergesellschaft MBH Ranshofen**
**5282 Braunau am Inn (AT)**

(72) Erfinder:
• **RAJNER, Walter**
**83329 Waging am See (DE)**

• **WALCHER, Martin**
**A-5110 Oberndorf (AT)**

(74) Vertreter: **Neidl-Stippler, Cornelia, Dr. Neidl-Stippler Patentanwaltskanzlei Rauchstrasse 2 81679 München (DE)**

(56) Entgegenhaltungen:
**WO-A-89/05196         CH-A- 389 364**
**DE-A- 4 019 563       US-A- 5 196 049**

**Beschreibung**

Die Erfindung betrifft ein Verfahren zur gesteuerten Herstellung von partikelförmigem Material aus der Schmelze.

Die Herstellung von paräketförmigem Material aus Schmelzen ist für Kunststoffe, Naturstoffe, Gläser und auch Metalle bekannt. Dabei besteht ein ständig wachsender Bedarf an Pulvern derartiger Materialien kleiner Korngröße.

Diese bekannten Verfahren produzieren ein partikelförmiges Material, das auch als Pulver, Granulat, Gries od. dgl. bezeichnet werden kann. Nachfolgend werden diese partikelförmigen Materialien der Einfachheit halber als Pulver bezeichnet. Derartige Pulver werden bspw. für Spritzgußtechniken, Herstellung von Legierungen, Sinterverfahren, Verbundmaterialien, Katalysatoren, Anstrichstoffe und Lacke, Schaumstoffherstellung etc. eingesetzt. Der Markt für diese Anwendungen hat hohen Bedarf an Pulver geringer Korngröße bestimmter Komformen in großen Mengen zu geringen Kosten. Bisher wurden derartige Pulver unter anderem dadurch hergestellt, daß - wie bspw. in der WO 01/62987 beschrieben, flüssige Schmelzen, wie oxidische Schlacken, Gläser oder Metallschmelzen durch Hochdruck-Gasexpansion in einen Raum schlagartig verdüst oder anderweitig zerstäubt werden - beispielsweise durch rotierende Platten, die die auftreffenden Tröpfchen wegschleudern und so zerkleinern (Rotating Disc Method), oder aber auch "Roller Atomization" - Rollenzerstäubung - wobei geschmolzene Metalltröpfchen auf sich drehende Rollen auftreffen und von diesen weggeschleudert werden und sich auf der Flugbahn verfestigen Ein weiteres typisches Verfahren ist das Wasserzerstäuben. In größerem Maßstab wird hauptsächlich das Gaszerstäuben eingesetzt. Dazu werden Düsen, wie Lavaldüsen, eingesetzt, in denen die flüssige Schmelze zunächst stark beschleunigt und danach unter starker Beschleunigung auf hohe Geschwindigkeit am Düsenaustritt in einen Raum schlagartig expandiert und so zerstäubt.

Ein typisches Verfahren ist in der Österreichischen Patentschrift 2987350 der Eckart-Werke beschrieben. Die Schmelze wird bevorzugt gleichzeitig mit der schlagartigen Expansion beim Düsenaustritt durch Gasströme weiter verteilt und dadurch feinverteilte Schmelzetröpfchen erhalten, die sich beim Abkühlen verfestigen und so das Pulver bilden. Somit bestehen die bekannten gattungsgemäßen Verfahren darin, eine Materialschmelze nach Austritt aus einer Düse mit Gas zu kontaktieren und gleichzeitig schlagartig zu expandieren. Dieses bekannte Verfahren war insofern nachteilig, als es schwierig zu steuern war, häufig unterbrochen werden mußte und nicht kontinuierlich gefahren werden konnte. Schließlich waren die Energiekosten hoch.

Aus der WO 99/11407 der Pacific Metals Co. Ltd. ist es bekannt, Metallpulver durch Zerstäuben von schmelzflüssigem Metall zu erhalten, in dem ein Abwärtsstrom schmelzflüssigen Metalls am Ausgang einer Düse zerstäubt wird, indem er in die Mitte der Düse gemeinsam mit einem ihn umhüllenden laminaren Gasstrom eingeleitet wird und bei Austritt beider Strömungen aus einer Kegeldüse ein Flüssigkeitsstrom zugeleitet wird, der die Zerstäubung verstärkt. Hier muß ein Flüssigkeitsstrom zusätzlich zum Gasstrom vorgesehen werden, was aufwendig ist.

Aus der EP-A-1038976 ist ein Verfahren bekannt, bei dem versprühte Schmelzentröpfchen im Inneren eines Sprühstrahls durch Nachverbrennung von Heißgasen nach Austritt aus der Sprühdüse im Inneren einer gekühlten Kühlkammer nochmals erhitzt werden und so eine bessere Verteilung der Schmelzetröpfchen durch die erhitzten verbrennenden Gase erreicht und so die Feinheit des hergestellten Pulvers verbessert wird. Dieses Verfahren ist sehr energieaufwendig, da es das Kühlen der Kühlkammerwände erfordert und zur Herstellung kleiner Partikelgrößen aufwendige Maßnahmen durchführen muß.

Ein Nachteil der bekannten Verfahren war auch, dass diese die Teilchengröße oder - form nicht zu steuern vermochten - es wurde bei einer eingestellten Gas/Flüssigkeits-Ratio ein gleichbleibendes Teilchengrößespektrum erzeugt, auf das sonst kein Einfluß genommen werden kann.

Es ist demzufolge Aufgabe der Erfindung, ein kontinuierlich arbeitendes effizientes Verfahren zur gesteuerten Herstellung von Pulvern aus Materialschmelzen zu schaffen, das es ermöglicht, Größe und Form der hergestellten Teilchen zu steuern.

Die Aufgabe wird erfindungsgemäß gelöst durch ein Verfahren mit den Merkmalen des Patentanspruches 1. Vorteilhafte Weiterbildungen ergeben sich aus den abhängigen Ansprüchen.

Überraschenderweise wurde festgestellt, dass durch die erfindungsgemäße zweifache Einstellung des Gas/Schmelzenverhältnisses - beim ersten Mischschritt innerhalb der Schmelze und bei der schlagartigen Expansion am Düsenaustritt das Komgrößenspektrum sowohl hinsichtlich der mittleren Teilchengröße als auch hinsichtlich des Gesamtteilchengrößeverteilungsspektrums steuerbar ist, wobei bei gleichem Gasverbrauch kleinere Teilchen erzielt werden können, als bei den Verfahren, die Gas nur einmal zuführen.

Im ersten Mischschritt verringert sich bei Zugabe von mehr Gas zur Schmelze die durchschnittliche Teilchengröße

Das Verhältnis der Massendurchsätze der beiden Phasen GLR = $m_{gas}:m_{liq}$ (**G**as/**L**iquid-**R**atio) wird durch folgende Faktoren bestimmt:

1) die Eintrittsquerschnitte in die Mischkammer $A_{gas}$ bzw. $A_{liq}$

2) die am Eintritt anliegenden Vordrücke $p_{0,gas}$ bzw. $p_{0,liq}$

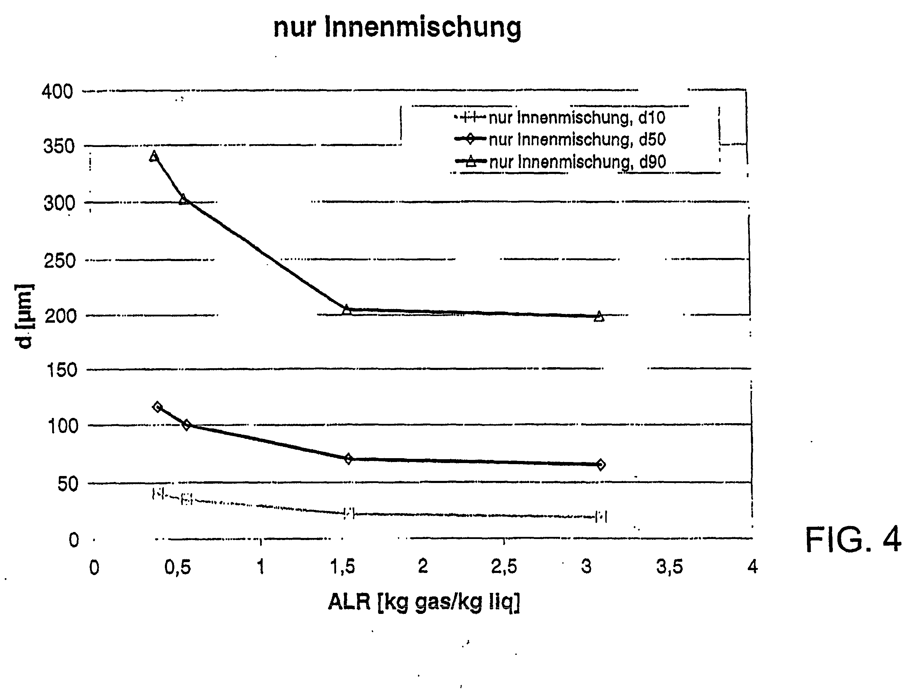

Die beiden Faktoren können erfindungsgemäß wahlweise geregelt werden, um ein gleich bleibendes Verhältnis GLR bei der Verdüsung zu gewährleisten. Der Einfluß der GLR auf die Pulverfeinheit ist in Fig. 4 dargestellt. Daraus ist ersichtlich, dass über die Regelung der Eintrittsquerschnitte $A_{gas}$ bzw. $A_{liq}$ oder über die anliegenden Vordrücke $p_{0,gas}$ bzw. $p_{0,liq}$, ,die beide dem Massenverhältnis beider Komponenten entsprechen, die Partikelfeinheit gesteuert werden kann.

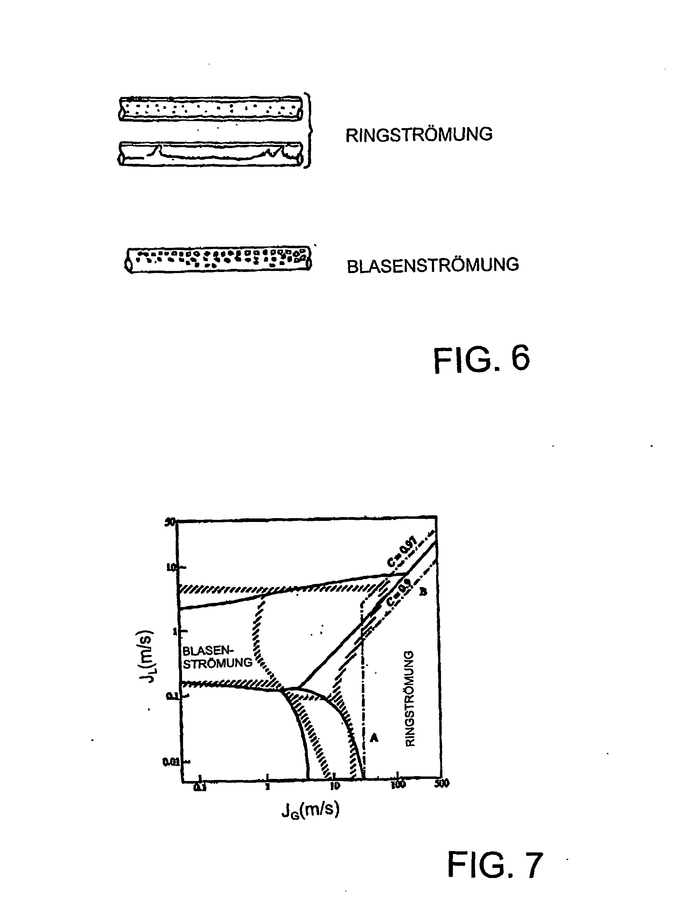

Die Zugabe weiterer Gases am Düsenaustritt führt zu noch feinerem Material. Dazu ist es wichtig, die Strömungsverhältnisse in der Mischkammer zu kennen: Je nach Leerrohrgeschwindigkeit J der flüssigen und gasförmigen Phase ($v_{LR,l} = m_l / A$) können sich unterschiedliche Strömungsregimes ausbilden (Fig. 6), beim erfindungsgemäßen Verfahren wird mit Blasenströmung oder Ring-(Spritzer-)Strömung gearbeitet. Die dazu einzustellenden Leerrohrgeschwindigkeiten für Gas $J_G$ und Flüssigkeit $J_L$ sind für den Fachmann aus dem Diagramm der Fig. 7 zu entnehmen.

Blasenströmung

Die Gasphase bildet bei Arbeiten im Bereich der Blasenströmung in der Mischkammer kleine Blasen, die aufgrund des Druckabfalls expandieren und an der Stelle des größten Druckabfalls (im Bereich des Düsenaustritts) zerplatzen. Dabei wird die kontinuierliche Flüssigphase in Ligamente zerteilt, die in einem zweiten Schritt zu Tröpfchen zerfallen. Die kritische Größe für diesen Sekundärtropfenzerfall ist die relative WEBER-ZAHL $We_{rel}$ (s. Wallis, G.B: (1969) - One-Dimensional Two-Phase Flow; New York: Mc. GRAW-HILL)

$$We_{rel} = (\rho_{gas} \cdot d_{drop} \cdot v_{rel}^2)/\sigma$$

Mit $v_{rel} = v_{gas} - v_{liq}$ Relativgeschwindigkeit zwischen Gas und Flüssigkeit (m/sec)
$d_{drop}$ = Durchmesser des Flüssigkeitstropfens (m)
($\rho_{gas}$ = Dichte des Gases.(kg/m$^3$)
$\sigma$ = Oberflächenspannung der Schmelze (N/m)
Für Sekundärtropfenzerfall gilt $We_{rel} < 12 - 13$

Um bspw. bei einem Wassertropfen der Größe $d_{drop}$ = 50 μm am Düsenaustritt Sekundärtropfenzerfall zu erreichen, wäre eine Relativgeschwindigkeit zwischen Tropfen und umliegendem Gas von um 125 m/s nötig, die aber aufgrund der limitierenden zweiphasigen Schallgeschwindigkeit niemals erreicht werden kann. Nun wird durch Aufbringen einer Aussenmischung überraschenderweise die notwendige Relativgeschwindigkeit zur Verfügung gestellt, um die am Düsenaustritt vorhandenen Ligmente und Tropfen energiesparend zerstäuben zu können. Dadurch kann über die Gasgeschwindigkeit der Aussenmischung der Partikeldurchmesser des Pulvers gesteuert werden. Die oben genannte Beziehung zwischen der dimensionslosen Weberzahl gilt für alle Flüssigkeiten (auch Metalle). Das bedeutet, dass mit diesem Verfahren auch Cu, Al, Zn, Sn etc. zu Pulver verarbeitet werden kann.

In der nachfolgenden Tabelle sind die kritischen Geschwindigkeiten angegeben, die für eine Sekundärzerstäubung für einen 50 μm Tropfen verschiedener Metalle notwendig sind:

|  | Oberflächenspannung σ | krit. Geschwindigkeit v |
|---|---|---|
|  | (N/m) | (m/s). |
| Wasser | 0,07 | 125 |
| Kupfer | 1,16 | 500 |
| Zinn | 0,68 | 380 |
| Aluminium (99%) | 0,18 | 196 |
| Blei | 0,43 | 303 |
| Eisen | 1,8 | 620 |
| Silber | 0,91 | 440 |

Bei der Zerstäubung von Metallen und anderen Materialien ist ferner zu berücksichtigen: Die für Sekundärtropfenzerstäubung benötigte Zeit ist bei Materialien, die bei hohen Temperaturen schmelzen, oft länger als die Zeit, die der Tropfen zur Erstarrung benötigt. Auch daher kann mit einer reinen Innenmischung kein so gutes Ergebnis in der Tropfen (=Pulver)feinheit erzielt werden kann.

Ringströmung

Bei steigenden Gasdurchsätzen in der Mischkammer koaleszieren die Blasen und es bildet sich ein ringförmiger Flüssigkeitsfilm entlang der Kammerwände, das Gas strömt im Kem der Kammer und reißt mit steigender Geschwindigkeit (bspw. bei Druckabfall) Tröpfchen aus dem Flüssigkeitsfilm heraus.

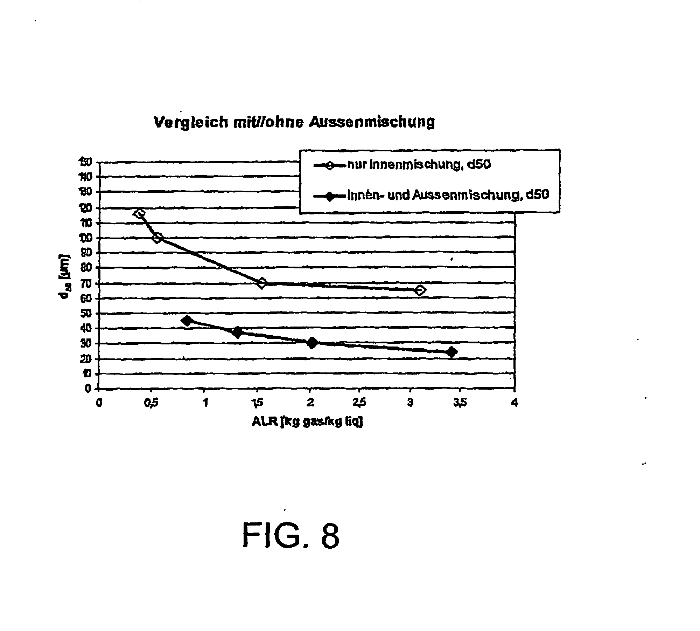

Der am Düsenaustritt vorliegende Flüssigkeitsfilm (die bei der Blasenströmung beschriebene Zerfallsmechanismen treten analog auch bei der Ringströmung auf) wird hier wiederum einer von außen zugeführten Sekundärluft ausgesetzt, die das benötigte gute Zerstäubungsergebnis erzielt, wie aus Fig. 8 ersichtlich .

Die Teilchenform kann ebenfalls durch das erfindungsgemäße Verfahren gesteuert werden, so werden rundere Teilchen bei inertgas erzielt, während länglichere Teilchen besonders bei Heißgas (Luft).auftreten. Die Teilchenform kann für die Anwendung des hergestellten Pulvers äußerst wichtig sein und ist daher ein wesentlicher Parameter.

Dadurch, daß zunächst eine definierte innige Schmelze/Gasmischung hergestellt und diese nach Herstellung dieser Mischung schlagartig unter Zugabe weiterer Gases expandiert wird, wird in überraschender Weise eine bessere Zerkleinerung der Materialtröpfchen, eine Steuerung der Teilchenform sowie ein einstellbares Komgrößenspektrum erhalten. Ferner hat sich überraschenderweise gezeigt, daß der Energieverbrauch des Verfahrens gegenüber bekannten Gaszerstäubungsverfahren, die erheblich mehr Gas - bei erheblich höherem Druck - einsetzen müssen, wesentlich verringert werden kann.

Bevorzugt expandiert die innige Mischung Schmelze/Gas aus einer Zerstäubereinheit mit einer Geschwindigkeitserhöhung der Flüssigkeitströpfchen auf das 30 - 100 fache der Fördergeschwindigkeit aus dem Schmelzenbehälter in einen Auffangbehälter. Die Gasteilchen beschleunigen sich aufgrund ihrer geringen Masse noch erheblich stärker und sorgen so für Aufweitung des austretenden Strahls und verbesserte Zerstäubung. Zur Verbesserung der Zerstäubung kann die Expansion durch Verdüsen der inneren Materialmischung in einen Raum erniedrigten Drucks durchgeführt werden. Der Raum kann auch gekühlt sein, um die Abkühlung zu beschleunigen.

Es kann insbesondere für Metallschmelzen vorteilhaft sein, die innige Material/Gasmischung auf ein Verhältnis Gasfluß/geschmolzenes Material von 0,05 - 15, bevorzugt 0,5 - 3 und ganz besonders bevorzugt von 0,3 - 1,5 kg Gas/kg geschmolzenes Material einzustellen.

Als Material bietet sich z.B. schmelzfähiger Kunststoff an - Kunststoffgranulate werden für Spritzgußmaschinen etc. benötigt. Ferner fällt verdüsungsfähiges Material u.a. aus Recyclingmaterial an und das so hergestellte Granulat kann in einfacher Weise weiterverwendet werden - bspw. als Zuschlagstoff für Zement od. dgl. Andere geeignete Materialien sind Metalle, wie Zn, Ni, Al, Ag, Mg, Si, Ca, Cu, Ni, Mo, Pb, Ti, Sn, Li, Be, W, Fe, Co, Cr, Mn, Be und insbesondere deren Legierungen. Me-talle in Pulverform sind für die verschiedensten Anwendungen erwünscht, bspw. für Metallguß, wie Spritzguß, für Verbundmaterialien, Katalysatoren, Anstrichstoffe, Farben.

Bei allen diesen Anwendungen ist offensichtlich, daß auch die Teilchenform eine wesentliche Rolle spielt - so haben rundere Teilchen anderes Rieselverhalten und Schüttwinkel und eignen sich bspw. besser zum vollständigen Ausfüllen von Formen ohne Hohlräume und sind leichter förderbar aufgrund geringerer innerer Reibung - als längliche, spratzige Teilchen, die größere Reibung gegeneinander haben, was aber für verschiedene Anwendungsformen erwünscht ist, bspw. für die Herstellung von Preßlingen oder für das Strangpressen.

Nach dem erfindungsgemäßen Verfahren können verschiedenste Schmelzen, wie Gläser und schmelzfähige Keramik, Metalle verdüst werden. Es können aber auch schmelzfähige Naturstoffe, wie Fette oder Wachse, die bei Umgebungstemperatur fest sind, verarbeitet werden.

Als Gase eignen sich die dem Fachmann für das zu verdüsende Material als geeignet bekannten Gase - falls Oxidation nur eine untergeordnete Rolle spielt, kann das Gas preiswerte Luft sein - es kann aber auch mit Inertgas, wie Edelgas oder jedem anderen Gas, das mit dem zu verdüsenden Material nicht in nennenswertem Maß reagiert - bspw. Stickstoff oder Argon, gearbeitet werden. Typischerweise ist das Gas ausgewählt aus der Gruppe bestehend aus Inertgasen, wie Edelgas, Helium, Argon, Stickstoff - die auch die Teilchenform beeinflussen - oder teilweise mit der Schmelze reagierenden Gasen, wie Stickstoff, Luft, Kohlendioxid, Kohlenmonoxid, Wasserdampf, Verbrennungsgas oder aber Mischungen derselben, wobei die Zuordnung des Gases zu Inertgasen von der Art des zu verdüsenden Materials abhängig ist, wie dem Fachmann offensichtlich ist. Die Verbrennungsgase umfassen insbesondere auch insbesondere in situ hergestellte Verbrennungsgase. Unter einem in situ entstehenden Verbrennungsgas wird ein solches verstanden, das sich in der Schmelze aus brennbaren Komponenten bildet - bspw. durch Zumischung von Kohlenwasserstoffen zur Schmelze, die auch oxidationsfähige Komponenten aufweist - bspw. sauerstoffhaltige Komponenten. Durch die Verbrennung wird das Gasvolumen plötzlich um das Vielfache gesteigert und die Mischung Gas/Schmelze durchwirbelt.

Bei einer typischen Anwendung des Verfahrens werden die Schmelzpartikel des innigen Gemischs auf die 5 - 100fache Geschwindigkeit während einer explosionsartigen Expansion am Düsenaustritt beschleunigt, wobei sie sich verfestigen. Eine typische Partikelgeschwindigkeit im Gemisch, das in einer Leitung zur Mischkammer gefördert wird, beträgt 0, 1 m/sec und wird sodann auf 50 - 100 m/sec beim Verdüsen beschleunigt. Die Gastellchen der Mischung werden aufgrund ihrer geringeren Masse erheblich höher beschleunigt, etwa in der Größenordnung des 1000fachen.

Weitere Ziele, Merkmale und Vorteile ergeben sich aus der folgenden Beschreibung und den Ansprüchen gemeinsam mit den begleitenden Zeichnungen. Dabei zeigt:

Fig.1 eine schematische Darstellung der Verfahrensschritte;

Fig.2 eine perspektivische Teilansicht einer erfindungsgemäß einsetzbaren Anordnung zur Durchführung des Verfahrens;

Fig. 3 eine Schnittansicht einer Düse zum Einsatz in erfindungsgemäßen Verfahren

Fig.4 das Ergebnis der Verdüsung von Aluminium/Luftmischung ohne zusätzliche Luftzufuhr am Düsenaustritt;

Fig. 5 das Ergebnis der Verdüsung von Aluminium/Luftmischung mit zusätzlichen Luftzufuhr am Düsenaustritt.

Fig. 6 schematische Darstellung Strömungsprofile

Fig. 7 Strömungsform in Abhängigkeit von der Leerrohrgeschwindigkeit von Gas und Flüssigkeit in der Mischkammer; und

Fig. 8 Vergleich der Verdüsung Aluminium mit Luft mit und ohne Luftzufuhr am Düsenaustritt - bei gleicher absoluter Menge zugeführter Luft

Nachfolgend werden bevorzugte Ausführungsformen der beschrieben - diese ist aber keineswegs auf diese Anwendung beschränkt - es kann nach diesem Verfahren ebenso anderes schmelzfähiges Material, andere Metalle, bspw. Nickel, Zinn, Silicium, Titan, Metallegierungen, wie Bronze; Glas oder auch Gläser, schmelzbare Kunststoffe (Thermoplasten), Naturstoffe, wie Fette und Wachse sowie weitere Materialien gepulvert werden.

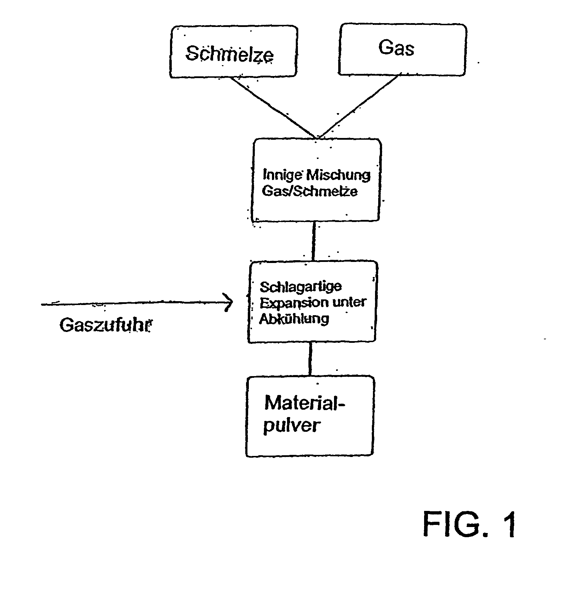

In Fig. 1 ist der Verfahrensablauf gemäß der Lehre der Erfindung schematisch dargestellt. Wie gezeigt, umfaßt das Verfahren die Herstellung einer Schmelze durch Aufschmelzen bei erhöhter Temperatur; Mischen der Schmelze (bei Metall) in einem Verhältnis von Gas/Metall von ca 0,05 -15 kg/kg. Die Mischung soll möglichst innig sein, damit das Gas gleichmäßig und in größerer Menge unter die Schmelze gemischt ist. Nach dem Mischschritt wird die so hergestellte Gas/Flüssigkeitsmischung schlagartig durch eine Düse in einen Bereich niedrigeren Drucks expandiert, wodurch sich die Materialtröpfchen verfestigen und zu Partikeln mit einer Teilchengröße von <1000 µm werden, die sich im Auffangbehälter während des Fluges verfestigen und sammeln. Gleichzeitig mit der schlagartigen Expansion wird am Düsenausgang nochmals Gas zugeführt, wodurch eine noch stärkere Aufweitung des Materialtröpfchenstroms erfolgt, diese feiner verteilt werden und ein gesteuertes feineres Komgrößenspektrum hergestellt wird. Dieses hängt weitgehend von der Art des so zerstäubten Materials und des verwendeten Gases ab, wie oben näher erläutert.

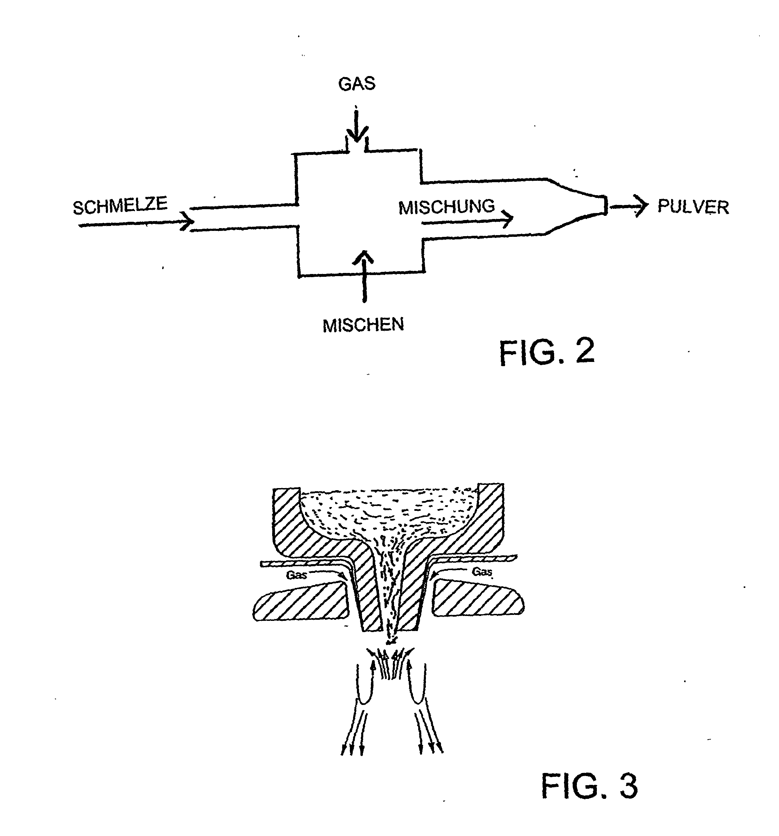

In Fig. 2 ist ein Schema eines Teils einer Anlage zur Durchführung des erfindungsge-mäßen Verfahrens dargestellt. Derartige Anlagen sind in allen wesentlichen Teilen bekannt und dem Fachmann geläufig - eine typische Anlage ist bspw. in der DE-A-2007 803 beschrieben. Die bekannten Anlagen werden nun erfindungsgemäß so weitergebildet, daß eine Mischeinrichtung zur Herstellung der innigen Gas/Materialmischung vor der Düse eingesetzt wird. Derartige Mischeinrichtungen für Gas-/Schmelzemischungen sind dem Fachmann bekannt und können von diesem entsprechend den zu verarbeitenden Schmelzen ausgewählt werden, wie elektromagnetisches Rühren, feinverteiltes Einbringen des Gases, wie über Fritten etc.

Ein typisches Verhältnis Gas/Material in der innigen Mischung liegt - bspw. für Aluminium - im Bereich zwischen 10 - 60 Gew.% . Bei der Verwendung von Inertgas kann weniger Gas verwendet werden, im Bereich von 10 - 30 Gew.%; Bei Luft als Gas liegt das Verhältnis bei 20 - 60 Gew.% Gas in der Mischung. Durch Variation des Gasgehalts kann hier die Korngrößenverteilung verschoben werden - der Mittelwert der Korngröße variiert. Ferner muß erheblich weniger Luft eingesetzt werden, als bei den Gaszerstäubungsverfahren nach dem Stand der Technik notwendig. Es ist nun möglich, anstelle eines Gas/Metallverhältnisses von 10:1 beim Stand der Technik, der Gas nur einmal zuführt, mit einem Verhältnis von 0,5 - 1,5 kg/kg Gas/Metall zu arbeiten, was eine erhebliche Ersparnis bedeutet, da nur etwa ein Zehntel der Gasmenge zugeführt werden muß, um eine vergleichbare mittlere Teilchengrößen zu erhalten - die Verfahren nach dem Stand der Technik ermöglichen noch dazu keine Steuerung der Teilchenform oder des Teilchengrößenspektrums.

Eine typische bei derartigen Anwendungen zur schlagartigen Expansion eingesetzte Düse ist in Fig. 3 gezeigt. Deutlich ist hier der Zutritt von Gas im Austrittsbereich der Gas/Materialmischung zu erkennen, der zu einer besseren Führung des Stroms austretenden Materials führt und ein Festsetzen verfestigten Materials an der Düse erheblich verringert und die Teilchengröße herabsetzt.

Überraschenderweise hat sich somit gezeigt, daß durch Verwendung einer Gas/Materialschmelzenmischung die Gaszufuhr beim Einsatz von Düsen mit Gaszutritt beim Austritt der Schmelze bei gleicher Ausbeute an Materialpulver stark verringert werden kann und das Korngrößenspektrum sowie die Komform gesteuert werden kann.

### Verdüsung von Zink

Zink wird bei einer Temperatur von etwa 500°C (Schmpkt: 420°C) geschmolzen. Das flüssige Metall wird mit Luft in einer Mischkammer in einem Verhältnis von1 kg Luft/kg Zn gemischt und dann über eine an die Mischkammer angeschlossene Lavaldüse verdüst, wobei am Düsenaustritt nochmals Luft in einem Verhältnis von ca 0,5 kg/kg zugeführt wird. Es wurde Pulver mit einer mittleren Korngröße von $d_{50}$ = 70µm und einer Teilchengröße zwischen 3 und 200µm erhalten. Die Teilchen wiesen eine längliche, spratzige Form auf.

### Verdüsung einer Zink-Kupfer-Legierung

Eine Zink-Kupferlegierung wird bei einer Temperatur von etwa 800°C geschmolzen. Das flüssige Metall wird mit Luft in einer Mischkammer in einem Verhältnis von1 kg Luft/kg Zink-Kupferlegierung gemischt und dann über eine an die Mischkammer angeschlossene Lavaldüse verdüst, wobei am Düsenaustritt nochmals Luft in einem Verhältnis von ca 0,5 kg/kg zugeführt wird. Es wurde Pulver mit einer mittleren Korngröße von $d_{50}$ : 60µm und einer Teilchengröße zwischen 3 und 200µm erhalten. Die Teilchen wiesen eine längliche, spratzige Form auf.

### Verdüsung von Kupfer

Kupfer wird bei einer Temperatur von etwa 1220°C geschmolzen. Das flüssige Metall wird mit Luft in einer Mischkammer in einem Verhältnis von 2 kg Luft/kg Cu gemischt und dann über eine an die Mischkammer angeschlossene Lavaldüse verdüst, wobei am Düsenaustritt nochmals Luft in einem Verhältnis von ca 0,5 kg/kg Cu zugeführt wird. Es wurde Pulver mit einer mittleren Korngröße von $d_{50}$ :76µm und einer Teilchengröße zwischen 3 und 200µm erhalten. Die Teilchen waren fast rund.

### Verdüsung von Aluminium

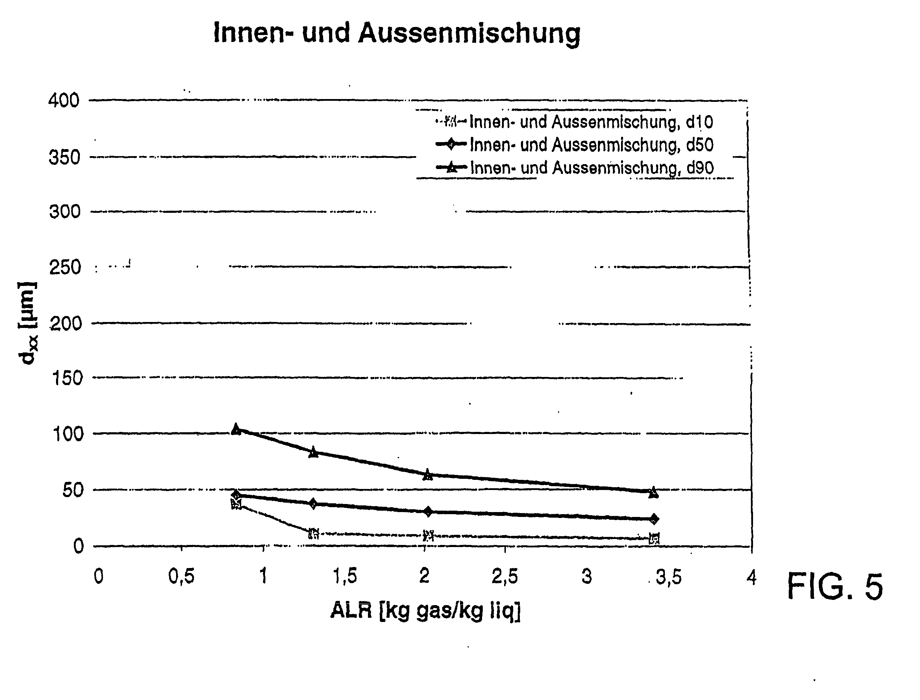

Aluminium wird bei einer Temperatur von ca 700°C geschmolzen. Das flüssige Metall wird mit Luft in einem Verhältnis von 0,4 kg Luft/1 kg Al in einer Mischkammer gemischt und dann über eine Lavaldüse verdüst, wobei beim Verdüsen 0,4 kg Luft/kg Al zugeführt wurden. Es wurde Pulver einer mittleren Korngröße $d_{50}$ : 45 µm erhalten, wobei die Komform länglich bis rund war.
Bei Einsatz eines Verhältnisses von 2 kg Luft/kg Al wurde eine mittlere Korngröße $d_{50}$ = 28.µm erhalten.
Ein Unterlassen der Zufuhr von Gas am Düsenaustritt führte bei gleicher Gasmenge/Metallschmetze zu. einem veränderten Komgrößenmittel - s. Fig. 4 und 5. Deutlich erkennt man den günstigen Einfluß der Außenluftzufuhr auf die Korngröße in Fig. 5. Mit steigender Luftzufuhr fällt die Korngröße, wobei dieser Einfluß bei Anwendung von Außenluft bei gleichem Luft/Metallverhältnis zu erheblich kleineren Partikeln führt. Wie aus Fig. 8 ersichtlich, ist bei gleicher Luftmengenzufuhr die Zufuhr der Luft in der Mischkammer und anschließend am Düsenaustritt deutlich kleineren Partikelgröße, als die alleinige Zufuhr der gleichen Luftmischung in der Mischkammer - hier halbiert sich die mittlere Teilchengröße.

### Verdüsung von Magnesium

Magnesium wird bei einer Temperatur von ca 700°C unter Stickstoffatmosphäre geschmolzen. Das flüssige Metall wird mit Stickstoff in einem Verhältnis von 1 kg $N_2$/1 kg Mg in einer Mischkammer gemischt und dann über eine Lavaldüse verdüst, wobei beim Verdüsen 0,5.kg $N_2$/kg Mg zugeführt wurden. Es wurde Pulver mit einer mittleren Korngröße von $d_{50}$ : 70µm erhalten, wobei die Komform länglich bis rund war. Bei Einsatz eines Verhältnisses von 0,2 kg $N_2$/kg Mg wurde eine mittlere Korngröße von.$d_{50}$ = 54.µm erhalten. Das Unterlassen der Zufuhr von Stickstoff zur Mischkammer führte bei gleicher Gasmenge/Mg zu erheblich größeren Partikeln mit $d_{50}$ = 180 µm. Das Weglassen der Gaszufuhr am Düsenaustritt führte zu einem $d_{50}$ = 120 µm. Daraus ergibt sich, dass nur die doppelte Gaszufuhr den erwünschten Effekt liefert.

### Verdüsung von Stahl

Stahl wird bei ca 1550°C geschmolzen. Das flüssige Metall wird mit Stickstoff in einem Verhältnis von 1 kg $N_2$/1 kg Stahl in einer Mischkammer gemischt und dann über eine Lavaldüse verdüst, wobei beim Verdüsen nochmals 0,5 kg $N_2$/kg Stahl zugeführt wurden. Es wurde Pulver einer mittleren Korngröße von $d_{50}$ : 80µm erhalten, wobei die Komform länglich bis rund war. Bei Einsatz eines Verhältnisses von .ca 2 kg $N_2$/kg Stahl wurde eine mittlere Korngröße von.$d_{50}$ = 62 µm erhalten.

Ein Unterlassen der Zufuhr von Gas zur Mischkammer führte bei gleicher Gasmenge/Metallschmelze zu Pulver mit $d_{50}$ = 221 µm. Das Weglassen der Gaszufuhr am Düsenaustritt führte zu einem Verstopfen der Düse.

Verdüsung von Schlacke

Schlacke aus der Roheisenherstellung wird bei einer Temperatur von 1400 °C geschmolzen. Das flüssige Material wird mit Luft in einem Verhältnis von 0,7 kg Luft/kg Schlacke gemischt und die Mischung dann über eine Lavaldüse verdüst, wobei am Düsenaustritt nochmals 0,7 kg Luft/kg Schlacke zugeführt wurde. Es wurde Pulver mit einer mittleren Korngröße von $d_{50}$ : 150µm erhalten.

Selbstverständlich ist diese Erfindung nicht auf die exakte Konstruktion oder die aufgeführten oder beschriebenen Ausführungsbeispiele begrenzt ist, sondern es sind unterschiedliche Abänderungen ohne Abweichen von Kern- und Schutzumfang der Erfindung für den Fachmann offensichtlich.

**Patentansprüche**

1. Verfahren zur Herstellung von partikelförmigem Material aus der Schmelze mit:

   - Aufschmelzen des Materials,
   - inniges Mischen der Materialschmelze mit einem Gas in einem vorherbestimmten Verhältnis;
   - schlagartiges Expandieren der Gas/Schmelzemischung; und
   - Sammeln des so hergestellten Materialpulvers,

   **gekennzeichnet durch**

   - Zugabe weiterer Gases in einem vorherbestimmten Luft/Schmelzeverhältnis während der Expansion unter Verfestigung der gebildeten Materialtröpfchen zu einem Materialpulver gesteuerter Größenverteilung und Form in einen Raum niedrigeren Drucks als die Gas/Schmelzemischung.

2. Verfahren nach Anspruch 1, **dadurch gekennzeichnet, daß** das Materialpulver in Korngrößen getrennt wird.

3. Verfahren nach Anspruch 1 oder 2, **dadurch gekennzeichnet, daß** das erste Mischen der Materialschmelze mit Gas kurz vor der schlagartigen Expansion erfolgt.

4. Verfahren nach einem der vorangehenden Ansprüche , **dadurch gekennzeichnet, daß** die Schmelze/Gasmischung mit einer Geschwindigkeitserhöhung von ca dem 30 - 100 fachen der ursprünglichen Geschwindigkeit der Gas/Flüssigkeitsmischung in einer Förderleitung zetur Mischkammer expandiert.

5. Verfahren nach einem der vorangehenden Ansprüche, **dadurch gekennzeichnet, daß** die Expansion in einen Raum niedrigerer Temperatur als die Schmelze durchgeführt wird.

6. Verfahren nach einem der vorangehenden Ansprüche, **dadurch gekennzeichnet, daß** die innige Materiat/Gasmischung ein Verhältnis Gas zu Material von 0,05 - 15, bevorzugt 0,5 - 3 und ganz besonders bevorzugt von 0,3 - 1,5 kg/kg besitzt.

7. Verfahren nach einem der vorangehenden Ansprüche, **dadurch gekennzeichnet, daß** das Material schmelzfähiger Kunststoff, Metall, insbesondere ausgewählt aus der Gruppe bestehend aus Zn, Ni, Al, Ag, Mg, Si, Ca, Cu, Ni, Mo, Pb, Ti, Sn, Li, Be, W, Fe, Co, Cr, Mn, und insbesondere deren Legierungen, ein Naturstoff, Schlacke, ist.

8. Verfahren nach einem der vorangehenden Ansprüche, **dadurch gekennzeichnet, daß** das Gas ausgewählt ist aus der Gruppe bestehend aus Inertgasen, wie Edelgas, Helium, Argon, Stickstoff, oder teilweise mit der Schmelze reagierenden Gasen, wie Stickstoff, Luft, Kohlendioxid, Kohlenmonoxid, Wasserdampf, in situ entstehende Verbrennungsgas oder aber Mischungen derselben ist, wobei die Zuordnung des Gases zu Inertgasen von der Art des zu verdüsenden Materials abhängig ist.

9. Vorrichtung zur hinsichtlich Form und Größenverteilung gesteuerten Herstellung von partiketförmigem Material, **gekennzeichnet durch**:

einen Schmelztiegel,
eine mit dem Schmelztiegel verbundene Vorkammer mit Gaseinlaß
eine mit der Vorkammer verbundene Düse mit Gaszuführung am Düsenaustritt.

## Claims

1. Method for producing particle-shaped material from molten substance with

   - melting of the material,
   - good mixing of the molten material with a gas in a pre-defined ratio,
   - sudden expanding of the gas/liquid mixture; and
   - collection of the thus produced material powder,

   **characterized by**

   - addition of further gas in a pre-defined air/liquid ratio during the expansion under solidification of the formed material droplets to the material powder in a controlled size distribution and shape into a chamber having lower pressure than the gas/liquid mixture.

2. Method according to claim 1, **characterized** therein, that the material powder is separated in grain sizes.

3. Method according to claim 1 or 2, **characterized** therein, that the first mixture of the molten material with gas takes place shortly before the sudden expansion.

4. Method according to one of the previous claims, **characterized** therein, that the melt/gas mixture expands in a conveying pipe to the mixing chamber with a velocity increase of approx. 30 - 100 times the original velocity of the gas/liquid mixture.

5. Method according to any one the previous claims, **characterized** therein, that the expansion is carried out into a chamber having lower temperature than the melt.

6. Method according to any one of the previous claims, **characterized** therein, that the inner material/gas mixture has a ratio of gas to material of 0.05 - 15, preferably 0.5 - 3 and ideally 0.3 - 1.5 kg/kg.

7. Method according to any one of the previous claims, **characterized** therein, that the material is meltable plastic; metal, especially selected from the group consisting of Zn, Ni, Al, Ag, Mg, Si, Ca, Cu, Ni, Mo, Pb, Ti, Sn, Li, Be, W, Fe, Co, Cr, Mn and particularly also their alloys, a natural substance or slag.

8. Method according to any one of the previous claims, **characterized** therein, that the gas is selected from the group consisting of inert gases, like precious gas, helium, argon, nitrogen, or gases partially reacting with the molten material, like nitrogen, air, carbon dioxide, carbon monoxide, water vapour, combustion gas generated in situ or even mixtures of these, whereby the classification of the gas as inert gas depends on the type of material to be nozzle jetted.

9. Device for producing particle-shaped material controlled with respect to shape and size distribution, **characterized by**:

   a melting crucible,
   a pre-chamber with gas inlet connected to the melting crucible,
   a nozzle with gas feed inlet at the nozzle exit connected to the pre-chamber.

## Revendications

1. Procédé de préparation d'un matériau sous forme de particules à partir de la masse fondue, qui comprend les étapes qui consistent à :

- faire fondre le matériau,
- mélanger intimement la masse fondue de matériau avec un gaz dans un rapport préalablement déterminé,
- détendre brusquement le mélange gaz/masse fondue et
- recueillir la poudre de matériau ainsi produite,

**caractérisé par** l'addition d'autres gaz dans un rapport air/masse fondue préalablement déterminé pendant la détente, les gouttelettes de matériau formées étant durcies en une poudre de matériau de granulométrie et de forme contrôlées dans un espace sous pression plus basse que celle du mélange gaz/masse fondue.

2. Procédé selon la revendication 1, **caractérisé en ce que** la poudre de matériau est divisée en fonction de sa granulométrie.

3. Procédé selon les revendications 1 ou 2, **caractérisé en ce que** l'on ne mélange la masse fondue de matériau avec le gaz que peu de temps avant la détente brusque.

4. Procédé selon l'une des revendications précédentes, **caractérisé en ce que** le mélange masse fondue/gaz se détend dans un conduit qui l'amène à une chambre de mélange avec une augmentation de vitesse d'environ 30 à 100 fois la vitesse initiale du mélange gaz/liquide.

5. Procédé selon l'une des revendications précédentes, **caractérisé en ce que** la détente est réalisée dans un espace dont la température est inférieure à celle de la masse fondue.

6. Procédé selon l'une des revendications précédentes, **caractérisé en ce que** dans le mélange intime matériau/gaz, le rapport entre le gaz et le matériau est compris entre 0,05 et 15 kg/kg, de préférence entre 0,5 et 3 kg/kg et de manière particulièrement préférée entre 0,3 et 1,5 kg/kg.

7. Procédé selon l'une des revendications précédentes, **caractérisé en ce que** le matériau est une matière synthétique fusible, un métal sélectionné en particulier dans le groupe constitué du Zn, du Ni, de l'Al, de l'Ag, du Mg, du Si, du Ca, du Cu, du Mo, du Pb, du Ti, du Sn, du Li, du Be, du W, du Fe, du Co, du Cr, du Mn et en particulier de leurs alliages, une substance naturelle ou une scorie.

8. Procédé selon l'une des revendications précédentes, **caractérisé en ce que** le gaz est sélectionné dans le groupe constitué des gaz inertes, par exemple les gaz rares, l'hélium, l'argon, l'azote, ou des gaz qui réagissent partiellement avec la masse fondue, par exemple l'azote, l'air, le dioxyde de carbone, le monoxyde de carbone, la vapeur d'eau, des gaz de combustion produits in situ ou des mélanges de ceux-ci, l'adjonction du gaz aux gaz inertes dépendant de la nature du matériau à pulvériser.

9. Dispositif de préparation d'un matériau sous forme de particules dont la granulométrie et la forme sont contrôlées, **caractérisé par** un creuset, une antichambre qui est reliée au creuset et qui présente une admission de gaz et un ajutage qui est relié à l'antichambre et qui est doté d'une amenée de gaz à la sortie de l'ajutage.

FIG. 1

FIG. 2

FIG. 3

# nur Innenmischung

FIG. 4

# Innen- und Aussenmischung

**FIG. 5**

RINGSTRÖMUNG

BLASENSTRÖMUNG

FIG. 6

FIG. 7

**Vergleich mit//ohne Aussenmischung**

FIG. 8